# EUROPÄISCHE PATENTSCHRIFT

(11) **EP 0 782 509 B1**
(45) Veröffentlichungstag und Bekanntmachung des Hinweises auf die Patenterteilung: **16.08.2001**
(21) Anmeldenummer: 95932014.4
(22) Anmeldetag: 08.09.1995
(51) Int. Cl.: B60Q 1/14

(54) **MIT MIKROSCHALTERN VERSEHENER LENKSTOCKSCHALTER MIT ZWEI BETRIEBSSTELLUNGEN UND EINER NEUTRALSTELLUNG**
STEERING COLUMN SWITCH WITH MICRO-SWITCHES, TWO WORKING POSITIONS AND A NEUTRAL POSITION
COMMUTATEUR SUR COLONNE DE DIRECTION POURVU DE MICRO-COMMUTATEURS ET AYANT DEUX POSITIONS DE FONCTIONNEMENT ET UNE POSITION NEUTRE

(30) Priorität: 12.09.1994 DE 4432343
(43) Veröffentlichungstag der Anmeldung: 09.07.1997
(73) Patentinhaber: Valeo Schalter und Sensoren GmbH, 74321 Bietigheim-Bissingen (DE)
(72) Erfinder: NEUBAUER, Walter, D-74348 Lauffen (DE); PRANG, Josef-Elmar, D-74321 Bietigheim-Bissingen (DE); KLEIN, Rudolf, D-74348 Lauffen (DE)
(74) Vertreter: Dreiss, Fuhlendorf, Steimle & Becker
(86) Internationale Anmeldenummer: EP9503535
(87) Internationale Veröffentlichungsnummer: WO9608390

(56) Entgegenhaltungen:
- DE-A- 2 444 808
- DE-A- 2 855 451
- DE-A- 3 211 672
- DE-A- 3 249 359
- DE-A- 3 623 979
- FR-A- 2 551 704
- GB-A- 2 084 805

## Beschreibung

Die Erfindung betrifft einen Schalter für Kraftfahrzeuge mit einem schwenkbaren Schalthebel, der in einer Schwenkstellung eine Neutralstellung aufweist, der ebenfalls ein elektrischer Zustand zugeordnet ist, gemäß dem Oberbegriff des Anspruchs 1.

Aus der DE-A-32 49 359 ist ein Lenkstockschalter bekannt bei dem in den beiden Betriebsschaltstellungen eines manuell betätigten Schalthebels über Mikroschalter die linken bzw. rechten Fahrtrichtungsanzeigenleuchten mit einer Spannungsquelle verbunden werden. In der Neutralstellung des Schalthebels wird bei diesem Schalter kein Betriebsstromkreis geschlossen.

Der bekannte Lenkstockschalter verwendet gekapselte Kreisschalter als Mikroschalter die von dem Schalthebel betätigt werden.

Ein ähnlicher Schalter mit zwei als Schließer ausgebildeten Mikroschaltern, die wechselweise über den Schalthebel betätigbar sind, wird als Betriebswahlschalter in Baumaschinen und Traktoren verwendet. In der einen Betriebsstellung des Schalthebels soll das Getriebe auf Vorwärtslauf in der anderen Betriebsstellung hingegen auf Rückwärtslauf geschaltet werden. Bei einem solchen Anwendungsfall wurde die Forderung erhoben, daß in der Neutralstellung des Schalthebels ein weiterer Stromkreis geschlossen werden soll, der beispielsweise in den Starterstromkreis einer Verbrennungskraftmaschine eingeschleift ist.

Dieser zusätzliche, in der Neutralstellung des Schalthebels geschlossene Stromkreis soll in beiden Betriebsschaltstellungen des Schalthebels unterbrochen sein wodurch wirksam vermieden wird, daß die Verbrennungskraftmaschine in einer der Betriebsschaltstellungen für Vorwärts- oder Rückwärtslauf des Getriebes gestartet werden kann.

Aus der DE-A-36 23 979 ist ein für diese Zwecke geeigneter Schalter bekannt, der mit zwei Mikroschaltern auskommt. Die dort gezeigten Schalter sind allerdings relativ aufwendig und wenig platzsparend. Die Schaltkontakte sind im übrigen nur wenig geschützt, so daß sie durch Schmutz und Korrosion leicht angegriffen werden können. Ein ähnlicher Schalter ist in der DE-A-28 55 451 beschrieben.

Ausgehend von einem Schalter, wie er aus der DE-A-32 49 359 bekannt geworden ist, liegt der Erfindung die Aufgabe zugrunde, einen derartigen, drei Stellungen aufweisenden Schalter preiswert, platzsparend und gegen Einwirkungen der Umwelt weitgehend unempfindlich aufzubauen.

Diese Aufgabe wird mit einem Schalter gelöst, der die Merkmale des Anspruchs 1 aufweist.

Der Schalthebel weist zum einen eine für seine Handhabbarkeit hinreichende Größe auf, zum anderen sind die Schaltwege der im Handel erhältlichen Mikroschalter sehr klein. Außerdem ist ein vereinfachter elektrischer Anschluß der Mikroschalter durch die Grundplatte des Schalters hindurch gewährleistet.

Um eine präzise Schaltung der Mikroschalter zu erhalten empfiehlt sich in Weiterbildung der Erfindung die sich aus Anspruch 2 ergebende Merkmalskombination. Damit wirkt der Schalthebel nicht direkt auf dem Betätigungsstift des zugehörigen Mikroschalters ein sondern indirekt über ein Schaltbügel, der die geeignete Kraft- und Wegübersetzung vornimmt.

Ein derartiger Schaltbügel kann am Ende eines Mikroschalters selbst drehbar gelagert angeordnet sein. Hierdurch wird allerdings eine Kraft- und Wegübersetzung vorgegeben, die für die Betätigung eines Mikroschalters in der Neutralstellung oft recht ungeeignet ist, da für die Betätigung des Schalters oft nur eine relativ kleine Winkelbewegung zur Verfügung steht. Um hier ebenfalls präzise schalten zu können, empfiehlt sich in Weiterbildung der Erfindung die Merkmalskombination nach Anspruch 3. Hierdurch ist es möglich, eine relativ niedrige Federkonstante hinsichtlich der Anlage des Schaltbügels an dem Schalthebel zu haben und gleichzeitig den Betätigungsstift des Mikroschalters über einen vergleichsweise kurzen Betätigungsweg des Schaltbügels zu bedienen.

Um den Betätigungsweg des an dem Betätigungsstift nur über einen kurzen Weg vorbeifahrenden Schalthebels in Betätigungsrichtung des Schaltstiftes zu vergrößern empfiehlt sich in Weiterbildung der Erfindung die in Anspruch 5 aufgeführte Merkmalskombination. Damit läßt sich insbesondere der Mikroschalter in einer eng begrenzten Schaltstellung des Schalthebels in einem gewünschten Betätigungszustand halten. Ansich kann dies dadurch geschehen, daß an dem Führungsansatz eine Steuerkontur vorgesehen ist, welche auf den Schaltbügel einwirkt und über diesen somit den Betätigungsstift bedient.

Um die hierdurch auftretenden Reibungen und die daraus resultieren Verschleißerscheinungen zu mindern empfiehlt sich in Weiterbildung der Erfindung die Merkmalskombination nach Anspruch 6.

In die in Längsrichtung des Schaltbügels ausgeübten Kräfte sinken damit auf ein Minimum und der Schalthebel läßt sich damit auch sehr leicht bedienen.

Um die gekapselten Mikroschalter einfach in dem Schalter montieren zu können, wird die Verwendung der Merkmale nach Anspruch 7 empfohlen. Danach werden die Gehäuse der Mikroschalter zwischen die Vorsprünge der Grundplatte eingefügt und können von diesen in einer Klemmverbindung gehalten werden.

Um zusätzlich noch ein Entweichen der Mikroschalter entgegen der Bestückungsrichtung zu verhindern empfiehlt sich die Verwendung der Merkmale nach Anspruch 8. Danach werden die Mikroschalter in einer Rastverbindung auf der Grundplatte festgehalten. Eine Materialersparnis läßt sich gegebenenfalls in Weiterbildung der Erfindung durch die Merkmale nach Anspruch 9 erreichen. Hierdurch kann mittels zweier Vorsprünge die Bewegung des Mikroschalters in der Ebene der Grundplatte verhindert werden. Dabei läßt sich eine zusätzliche Sicherung der Mikroschalter entgegen der Bestückungsrichtung noch durch die Merkmalskombination nach Anspruch 10 verhindern.

Ein Ausführungsbeispiel der Erfindung wird nachfolgend anhand der Zeichnung erläutert.

Darin zeigt:
- Fig. 1: eine Seitenansicht auf einen abgebrochen dargestellten Schalthebel,
- Fig. 2: eine Draufsicht auf den Schalthebel nach Figur 1,
- Fig. 3: eine Seitenansicht des ohne Schalthebel aufgebauten erfindungsgemäßen Schalters und
- Fig. 4: eine Draufsicht auf den Schalter nach Figur 3.

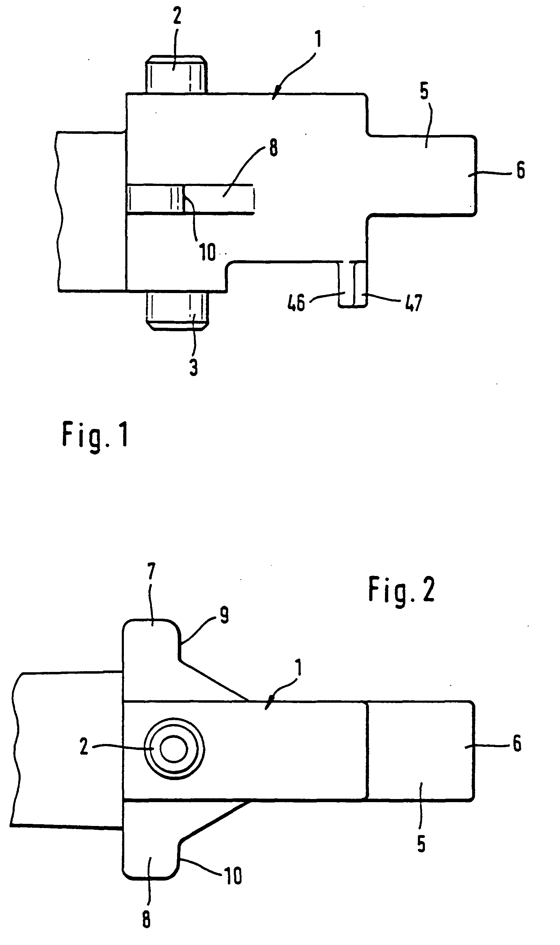

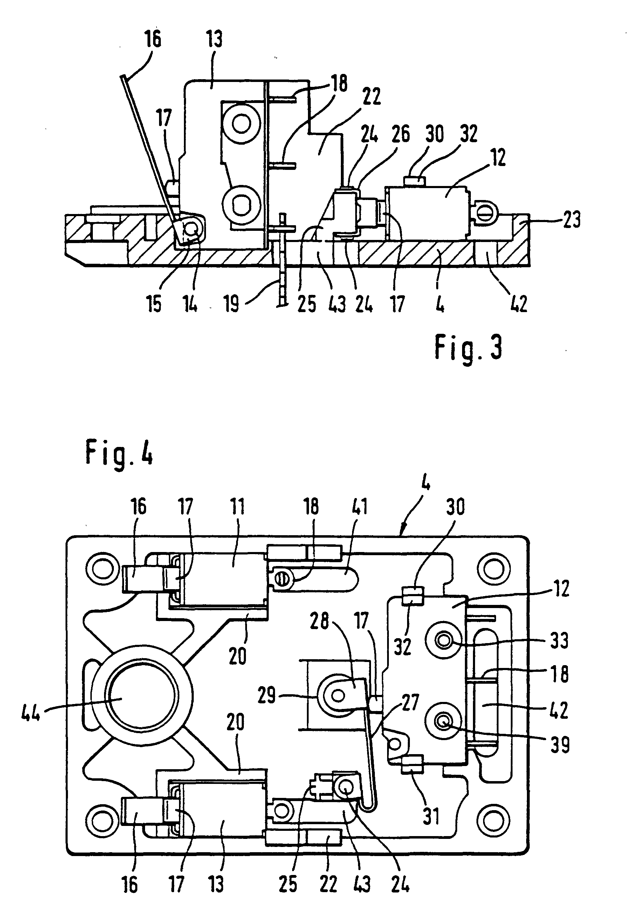

Der Schalthebel 1 ist mit Hilfe zweier Drehzapfen 2,3 drehbar gegenüber der Grundplatte 4 (Fig. 3, 4) auf dieser gelagert. Der Schalthebel besitzt in Figur 1 und 2 links von der gezeigten Bruchlinie eine nicht dargestellte Verlängerung, mittels der er um die Drehzapfen 2,3 auf der Grundplatte 4 schwenkbar ist. Der Schalthebel 1 ist weiterhin mit einer Hülse 5 zur Aufnahme eines Rastelementes versehen, wobei das Rastelement sich in ansich bekannter Weise an einer gegenüber der Grundplatte 4 ortsfesten Kontur abstützt und somit in drei Winkelstellungen einrastbar ist, die den beiden Arbeitslagen bzw. der Neutralstellung des Schalthebels entsprechen. In der Draufsicht nach Figur 2 ist der Schalthebel 1 in seiner Neutralstellung gezeigt während er sich mit Auslenkungen um die Drehzapfen 2 in Figur 2 seines Vorderendes 6 sich in seinen beiden Arbeitslagen befindet.

Der Schalthebel 1 trägt zwei Seitenflügel 7, 8, welche zwei Betätigungsflächen 9,10 aufweisen, die einer Drehbewegung des Schalthebels folgen. Die Grundplatte 4 in Figur 3 und 4 ist mit drei Mikroschaltern 11, 12, 13 bestückt, die gekapselt sind und alle den gleichen Aufbau haben. Dabei sind die beiden quaderförmigen Mikroschalter 11 und 13 derartig gestellt, daß die hochkant stehen, während der Mikroschalter 12 liegend auf der Grundplatte 4 befestigt ist. Die Gehäuse der Mikroschalter 11 und 13 besitzen zwei einander gegenüberliegende Lageransätze in der eine Lagergabel 15 eines Schaltbügels 16 schwenkbar gelagert ist. Die beiden Lagerbügel 16 wirken auf Betätigungsstifte 17 ein, die in die Gehäuse der Mikroschalter 11 bis 13 reichen und dort bei Bewegungen in ihrer Längsrichtung die gewünschten Schaltvorgänge auslösen.

Auf der den Betätigungsstift 17 gegenüberliegenden Seite der Mikroschalter 11 bis 13 sind die elektrischen Anschlüsse 18 der Mikroschalter gezeigt, an der beispielsweise eine elektrische Leitung 19 angeschlossen ist.

Die Mikroschalter 11 und 13 werden durch Seitenwände der Grundplatte gehalten, in deren umgrenzten Innenraum sie durch Klemmverbindungen eingeklemmt sind. Die Seitenwände 20 sind vergleichsweise niedrig zur Höhe der Mikroschalter. Zu der Halterung der Mikroschalter gehören noch hohe Seitenwände 22, die gleichzeitig noch für eine mechanische Abschirmung der elektrischen Anschlüsse 18 sorgen und die Mikroschalter 11, 13 in der Ebene der Grundplatte 4 in eine Richtung abstützen, die von den Seitenwänden 20 und einem umlaufenden Rand 23 nicht beherrscht wird. Aus der Grundplatte 4 ragt ein Lagerblock 25 von welchem zwei Lagerbolzen 24 abstehen mit welchem eine Lagergabel 26 schwenkbar gelagert ist.

Die Lagergabel 26 bildet das drehbar gelagerte Ende eines zweiten Schwenkbügels 27, welcher auf den Lagerstift 17 des Mikroschalters 12 einwirkt. An dem der Lagergabel 26 gegenüberliegenden Ende des Schaltbügels 27 ist eine zweite Lagergabel 28 angeordnet, in der eine Abtastwalze 29 drehbar gelagert ist. Zur Befestigung des liegenden Mikroschalters 12 auf der Grundplatte 4 dienen Rastarme 30, 31, die mit ihren Rastnasen 32 an der Oberfläche des Mikroschalters 12 angreifen und diesen gegen die Grundplatte halten. Zur Befestigung des liegenden Mikroschalter 12 dienen noch Haltevorsprünge 39, die durch Durchgangsöffnungen 33 in den Mikroschalter ragen. Die Haltevorsprünge können an ihrem zum Betrachter hin oberen Ende nach Einbau des Mikroschalters 12 platt geformt sein so daß sie ein Herausheben des Mikroschalters ebenfalls zu hindern vermögen.

Die Grundplatte besitzt im Bereich der Anschlüsse 18 Fenster 41, 42, 43 durch die, wie weiter oben schon beschrieben, ein elektrischer Leiter 19 (Fig. 3) von einem Anschluß 18 zum Bordnetz eines Kraftfahrzeuges oder einem Verbraucher geführt sein kann.

Im zusammengebauten Zustand ist der Schalthebel 1 über seine Drehzapfen 2, 3 gegenüber der Grundplatte 4 drehbar gelagert. Dabei greift der Drehzapfen 3 in einen Zylindertopf 44 auf der Grundplatte 4 ein. Die in dem Gehäuse des Schalters 2 befindliche Lagerstelle für den Drehzapfen 2 ist aus der Zeichnung nicht ersichtlich.

Der auf der Grundplatte 4 schwenkbar gelagerte Schalthebel greift mit seinen Betätigungsflächen 9, 10 der den Seitenflügel 7, 8 an den Schaltbügeln 16 an, die in Figur 4 von rechts unten nach links oben zum Betrachter hin schräg verlaufen.

Im eingebauten Zustand des Schalthebels 2 ist aber der freie Schwenkweg für die Schaltbügel derart beschränkt, daß ein vergleichsweise geringer Schwenkweg des Schalthebels zur Betätigung der beiden Mikroschalter 11, 13 ausreichen muß.

Am unteren Ende des Schalthebels (siehe Fig. 1) ist an diesem ein Steueransatz 46 befestigt, der eine im wesentlichen V-förmige Steuerkontur 47 trägt. Die Steuerkontur 47 fährt beim Schwenken des Schalthebels an einer im Bereich seiner Neutralstellung an dem in Richtung der Konturfedern vorgespannten Abtastwalze 29 vorbei, so daß die Walze und damit das zugehörige Ende der zweiten Lagergabel 28 entsprechend der Steuerkontur 47 (vergleichsweise V-förmig) ausgelenkt wird. Diese Auslenkung resultiert aus einer geringen Schwenkbewegung um den Lagerbolzen 24.

Daß beim Vorüberfahren der Steuerkontur 47 in Figur 4 nach rechts ausschwenkende freie Ende der zweiten Lagergabel drückt damit den Betätigungsstift 17 des Mikroschalters 12 in diesen ein und bedient damit den Schaltkontakt des Mikroschalters in der gewünschten Weise.

## Patentansprüche

1. Schalter, insbesondere für Kraftfahrzeuge, mit einem manuell betätigbaren, aus einer Neutralstellung wahlweise in eine erste oder eine zweite Betriebsstellung umschaltbaren Schalthebel (1) sowie einem ersten und einem zweiten jeweils aus einer Ruhelage in eine Arbeitslage umstellbaren Mikroschalter (11, 13), wobei in der Neutralstellung des Schalthebels (1) vorzugsweise die Kontaktzungen (16) beider Mikroschalter (11, 13) ihre Ruhelage einnehmen, und wobei die Mikroschalter (11, 13) in sich geschlossen und lösbar mit einer Grundplatte (4) des Schalters verbunden sind, und auf der Grundplatte (4) ein in der Neutralstellung des Schalthebels (1) durch diesen betätigter dritter Mikroschalter (12) angeordnet ist, dadurch **gekennzeichnet,** daß der erste Mikroschalter (11) und der zweite Mikroschalter (13) hochkant und der dritte Mikroschalter (12) liegend auf der Grundplatte (4) angeordnet sind und daß die elektrischen Anschlüsse (18) der Mikroschalter (11, 12, 13) oberhalb von Fenstern (41, 42, 43) in der Grundplatte (4) liegen, durch welche Anschlußleitungen (19) von unterhalb der Grundplatte (4) zu den Anschlüssen (18) führbar sind.

2. Schalter nach Anspruch 1, dadurch **gekennzeichnet**, daß ein Schaltbügel (16) vorgesehen ist, an denen der Schalthebel (1) angreift und den zugehörigen Schalter (11 bzw. 12 bzw. 13) in seine Betriebsstellung bringt.

3. Schalter nach Anspruch 1 oder 2, dadurch **gekennzeichnet**, daß der Schaltbügel (27) des dritten Mikroschalters (12) schwenkbar an der Grundplatte (4) gelagert ist und an seinem verschwenkbaren Ende (28) auf einen Betätigungsstift (17) des dritten Mikroschalters (12) einwirkt.

4. Schalter nach Anspruch 3, dadurch **gekennzeichnet**, daß die Schwenkachse (24) des Schaltbügels (27) parallel zur Schwenkache (2, 3) des Schalthebels (1) steht.

5. Schalter nach einem der vorhergehenden Ansprüche, dadurch **gekennzeichnet**, daß der Schalthebel (1) einen Steueransatz (46) besitzt, der während der Schwenkbewegung des Schalthebels (1) an den Schaltbügel (27) angreift und diesen betätigt.

6. Schalter nach einem der vorhergehenden Ansprüche, dadurch **gekennzeichnet**, daß an dem Schwenkbügel (27) eine Abtastwalze (29) drehbar gelagert ist, die während der Schwenkbewegung des Schalthebels (1) eine an dem Steueransatz (46) angebrachte Steuerkontur (47) abtastet.

7. Schalter nach einem der vorhergehenden Ansprüche, dadurch **gekennzeichnet**, daß der dritte Mikroschalter (12) zwischen senkrecht von der Grundplatte (4) vorstehenden Vorsprüngen (20, 22, 30, 31, 32) gehalten ist.

8. Schalter nach einem der vorhergehenden Ansprüche, dadurch **gekennzeichnet**, daß mindestens ein, vorzugsweise zwei, Vorsprünge (30, 31) mit Rastnasen versehen sind, die jeweils einen Seitenrand des Mikroschalters (12) hintergreifen und so den Mikroschalter an der Grundplatte (4) festhalten.

9. Schalter nach einem der vorhergehenden Ansprüche, dadurch **gekennzeichnet**, daß ein Haltevorsprung (39) in eine Öffnung des Mikroschalters (12) eingreift und/oder eine Durchgangsöffnung (33) des Mikroschalters (12) hindurchgreift.

10. Schalter nach einem der vorhergehenden Ansprüche, dadurch **gekennzeichnet**, daß der die Durchgangsöffnung (33) durchgreifende Vorsprung (39) an seinem das Durchgangsloch überragenden Ende derart warm verformt ist, daß er die Kante der Durchgangsöffnung (33) hintergreift.

## Claims

1. Switch, in particular, for motor vehicles, comprising a manually actuated operating lever (1) that can be selectively moved from a neutral position into a first or a second operating position as well as a first and a second sensitive microswitch (11, 13) that can be respectively moved from an idle position into an operating position, wherein the contact tabs (16) of both sensitive microswitches (11, 13) preferably assume their idle position in the neutral position of the operating lever (1), and wherein the switches (11, 13) are realized in the form of conventional encapsulated microswitches that are connected to a base plate (4) of the switch in separable fashion, wherein a third microswitch (12) is arranged at the base plate (4) which is actuated by the operating lever (1) in the neutral position of the operating lever, characterized by the fact the first microswitch (11) and the second microswitch (13) are arranged upright and that the third microswitch (12) is lying on the base plate (4) and that the electrical connections (18) of the microswitches (11, 12, 13) lie above windows (41, 42, 43) in the base plate (4), with connecting lines (19) that lead to the connections (18) extending through said windows from underneath the base plate (4).

2. Switch according to Claim 1, characterized by the fact that a terminal link (16) is provided, with the operating lever (1) engaging on the terminal link and moving the corresponding switch (11 or 12 or 13) into its operating position.

3. Switch according to Claim 1 or 2, characterized by the fact that the terminal link (27) of the third microswitch (12) is arranged on the base plate (4) in pivoted fashion, and that the pivoted end (28) of said terminal link acts upon an actuating pin (17) of the third microswitch (12).

4. Switch according to Claim 3, characterized by the fact that the pivoting axis (24) of the terminal link (27) extends parallel to the pivoting axis (2, 3) of the operating lever (1).

5. Switch according to one of the previous claims, characterized by the fact that the operating lever (1) is provided with a control projection (46) that engages on the terminal link (27) and actuates said terminal link during the pivoting motion of the operating lever (1).

6. Switch according to one of the previous claims, characterized by the fact that a sampling roller (29) is arranged in rotatable fashion on the terminal link (27) in such a way that said sampling roller samples a control contour (47) arranged on the control projection (46) during the pivoting motion of the operating lever (1).

7. Switch according to one of the previous claims, characterized by the fact that the third microswitch (12) is held between projections (20, 22, 30, 31, 32) that particularly protrude from the base plate (4).

8. Switch according to one of the previous claims, characterized by the fact that at least one and preferably two projections (30, 31) are provided with latching tabs that respectively engage behind a lateral edge of the microswitch (12) and thus hold the microswitch on the base plate (4).

9. Switch according to one of the previous claims, characterized by the fact that a holding projection (39) engages into an opening of the microswitch (12) and/or extends through a through-opening (33) of the microswitch (12).

10. Switch according to one of the previous claims, characterized by the fact that the projection (39) that extends through the through-opening (33) is hot-deformed on its end that protrudes beyond the through-opening in such a way that it engages behind the edge of the through-opening (33).

## Revendications

1. Interrupteur, notamment pour véhicules automobiles, comportant un levier de commande (1) qui peut être actionné manuellement et commuté depuis une position neutre, au choix, dans une première ou une deuxième position de fonctionnement, ainsi qu'un premier et un deuxième micro-interrupteurs (11, 13) commutables chacun depuis une position de repos dans une position de travail, dans lequel les languettes de contact (16) des deux micro-interrupteurs (11, 13) prennent de préférence leur position de repos dans la position neutre du levier de commande (1), et dans lequel les micro-interrupteurs (11, 13) sont reliés fermés et de manière non permanente à une plaque de base (4) de l'interrupteur, et un troisième micro-interrupteur (12), actionné par le levier de commande (1) lorsque celui-ci se trouve en position neutre, est disposé sur la plaque de base (4), caractérisé en ce que le premier micro-interrupteur (11) et le deuxième micro-interrupteur (13) sont disposés debout et le troisième micro-interrupteur (12) à plat sur la plaque de base (4), et en ce que les connexions électriques (18) des micro-interrutepeurs (11, 12, 13) se situent au-dessus de fenêtres (41, 42, 43) dans la plaque de base (4), à travers lesquelles on peut faire passer des lignes de connexion (19), depuis le dessous de la plaque de base (4), vers les connexions (18).

2. Interrupteur selon la revendication 1, caractérisé en ce qu'il est prévu un étrier de commande (16) sur lequel agit le levier de commande (1) et qui amène l'interrupteur (11, respectivement 12, respectivement 13) correspondant dans sa position de fonctionnement.

3. Interrupteur selon la revendication 1 ou 2, caractérisé en ce que l'étrier de commande (27) du troisième micro-interrupteur (12) est monté de manière à pouvoir pivoter sur la plaque de base (4) et agit, à son extrémité (28) pivotante, sur un doigt d'actionnement (17) du troisième micro-interrupteur (12).

4. Interrupteur selon la revendication 3, caractérisé en ce que l'axe de pivotement (24) de l'étrier de commande (27) est parallèle à l'axe de pivotement (2, 3) du levier de commande (1).

5. Interrupteur selon l'une des revendications précédentes, caractérisé en ce que le levier de commande (1) possède un appendice de commande (46) qui, pendant le mouvement de pivotement du levier de commande (1), agit sur l'étrier de commande (27) et actionne ce dernier.

6. Interrupteur selon l'une des revendications précédentes, caractérisé en ce qu'un rouleau de palpage (29) est monté tournant sur l'étrier (27), lequel rouleau, pendant le mouvement de pivotement du levier de commande (1), palpe un contour de commande (47) ménagé sur l'appendice de commande (46).

7. Interrupteur selon l'une des revendications précédentes, caractérisé en ce que le troisième micro-interrupteur (12) est maintenu entre des saillies (20, 22, 30, 31, 32) qui dépassent verticalement de la plaque de base (4).

8. Interrupteur selon l'une des revendications précédentes, caractérisé en ce qu'au moins une saillie, de préférence deux saillies (30, 31) sont pourvues d'ergots d'encliquetage qui passent chacun derrière un bord latéral du micro-interrupteur (12) et fixent ainsi le micro-interrupteur à la plaque de base (4).

9. Interrupteur selon l'une des revendications précédentes, caractérisé en ce qu'une saillie de maintien (39) s'engage dans une ouverture du micro-interrupteur (12) et/ou une ouverture de passage (33) du micro-interrupteur (12).

10. Interrupteur selon l'une des revendications précédentes, caractérisé en ce que la saillie (39), qui traverse l'ouverture de passage (33), est déformée à chaud à son extrémité qui dépasse du trou de passage, de manière à passer derrière le bord de l'ouverture de passage (33).
